## Europäisches Patentamt

## European Patent Office

## Office européen des brevets

(19)

(11) Veröffentlichungsnummer: **0 068 202**
**B1**

(12)  # EUROPÄISCHE PATENTSCHRIFT

(45) Veröffentlichungstag der Patentschrift:
**12.09.84**

(21) Anmeldenummer: **82105040.8**

(22) Anmeldetag: **08.06.82**

(51) Int. Cl.³: **G 03 B  41/16,** G 21 K  1/02,
A 61 B  6/06, H 05 G  1/02

(54) **Röntgenuntersuchungsgerät.**

(30) Priorität: **22.06.81  DE 3124437**

(43) Veröffentlichungstag der Anmeldung:
**05.01.83 Patentblatt 83/1**

(45) Bekanntmachung des Hinweises auf die Patenterteilung:
**12.09.84 Patentblatt 84/37**

(84) Benannte Vertragsstaaten:
**BE CH DE FR GB IT LI SE**

(56) Entgegenhaltungen:
**DE - A - 2 058 423**
**DE - B - 1 061 177**
**DE - B - 1 192 513**
**DE - B - 1 229 380**
**US - A - 3 502 878**
**US - A - 3 518 435**
**US - A - 3 764 808**

(73) Patentinhaber: **SIEMENS AKTIENGESELLSCHAFT,
Berlin und München Wittelsbacherplatz 2,
D-8000 München 2 (DE)**

(72) Erfinder: **Michaelsen, Günter, Bogenstrasse 16,
D-8521 Möhrendorf (DE)**
Erfinder: **Förster, Erich, Markweg 3, D-8520 Erlangen
(DE)**

## Beschreibung

Die Erfindung bezieht sich auf ein Röntgenuntersuchungsgerät mit einer an einem Ende eine Röhre-Bildschichtträger-Halterung gehalterten Röntgenröhre mit angeflanschter Strahlenquelle und einem am anderen Ende der Halterung in konstantem Abstand von der Röntgenröhre, zu dieser ausgerichtet gehaltenen Bildschichtträger mit Mitteln zur zentrischen Positionierung von Bildschichten bestimmter vorgegebener Formate.

Bei der überwiegenden Mehrzahl der in der medizinischen Technik anfallenden Untersuchungen kommt man mit einem einzigen Film-Fokus-Abstand aus. Die Filmformate und die zugehörigen Röntgenfilmkassetten sind in den meisten Ländern in bestimmten Grössenverhältnissen zueinander abgestuft. Diese Abstufung variiert jedoch in manchen Ländern gegenüber derjenigen in anderen Ländern, so dass sich in der Praxis eine sehr grosse Vielfalt von Formaten ergibt.

Der Erfindung liegt die Aufgabe zugrunde, durch sinnvolle Beschränkung auf wesentliche Funktionen ein preiswertes Röntgenuntersuchungsgerät zu entwickeln. Es soll nicht nur in der Herstellung preiswert sondern auch in der Wartung und Handhabung so einfach und übersichtlich sein, dass es auch in den Entwicklungsländern mit ungeschultem Hilfspersonal bedienbar ist.

Bei einem Röntgenuntersuchungsgerät der eingangs genannten Art beinhaltet daher die Strahlenblende erfindungsgemäss eine um eine neben dem auszublendenden Strahlenkegel angeordnete Achse drehbare Blendenscheibe mit in den Strahlenkegel einschwenkbaren, den vorbestimmten Formaten der Bildschicht angepassten Durchbrüchen. Eine solche Strahlenblende ist nicht nur in ihrer Herstellung besonders einfach, sie ist zugleich auch robust, so gut wie gar nicht störanfällig und in ihrer Bedienung übersichtlich.

Die Ausblendung kann hinsichtlich ihrer Randschärfe wesentlich verbessert werden, wenn in Weiterbildung der Erfindung zwei verschiedene Blendenscheiben hintereinander auf der gleichen Achse befestigt sind und ihre gemeinsam in den Strahlenkegel drehbaren Durchbrüche den jeweils gleichen Strahlenkegel ausblenden. Durch solche hintereinandergeschalteten Ausblendebenen, die den gleichen vom gleichen Fokus ausgehenden Strahlenkegel ausblenden, wird eine starke Verringerung des Randschattenbereichs erreicht, weil damit auch afokale Röntgenstrahlen ausblendbar sind.

Die Abmessungen der Strahlenblende lassen sich bedeutend verringern, wenn die Achse an ihrem der Röntgenröhre zugewandten Ende näher zum Zentralstrahl gelagert ist als an ihrem anderen Ende. Hierdurch kann die kleiner, dem Fokus zugewandte Blendenscheibe noch kleiner gehalten und ausserdem auch noch platzsparender untergebracht werden, als wenn die Achse parallel zum Zentralstrahl, bzw. der Ausblendachse, ausgerichtet ist.

Die Bedienung der Strahlenblende lässt sich vereinfachen, wenn in Weiterbildung der Erfindung eine Blendenscheibe seitlich aus dem Gehäuse der Strahlenblende vorsteht. Dies hat den Vorteil, dass auf einen besonderen, störanfälligen Blendenantrieb verzichtet werden kann. Stattdessen kann die Blendenscheibe an ihrem vorstehenden Rand von Hand gedreht werden, bis das gewünschte Format eingeblendet ist.

Die exakte Einstellung der Strahlenblende wird erleichtert, wenn die Blendenscheibe Kerben trägt, die mit einer ihnen zugeordneten, im Gehäuse befestigten Raste in Eingriff bringbar sind. Hierdurch entfällt das exakte Einstellen des Drehwinkels der Blendenscheibe, weil diese in der jeweiligen zentrierten Stellung einrastet.

Weitere Einzelheiten der Erfindung werden anhand eines in den Figuren dargestellten Ausführungsbeispiels erläutert. Es zeigen:

Fig. 1 eine schaubildliche Ansicht des Röntgenuntersuchungsgerätes mit der erfindungsgemässen Strahlenblende,

Fig. 2 eine schematische Darstellung der Anordnung der Blendenscheiben in der Strahlenblende, und

Fig. 3 eine Aufsicht auf die den Untersuchungsobjekt zugewandte Blendenscheibe bei teilweise aufgebrochenem Gehäuse der Strahlenblende.

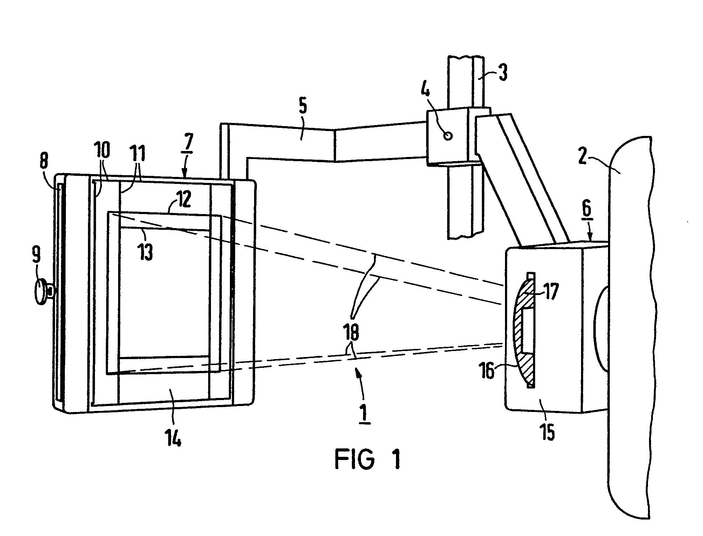

In der Fig. 1 erkennt man ein Röntgenuntersuchungsgerät 1, bei dem die Röntgenröhre 2 an einer an einer Stativsäule 3 höhenverstellbaren und um eine horizontale Achse 4 drehbaren Röhre-Bildschichtträger-Halterung 5 gehaltert ist. An der Röntgenröhre 2 ist eine Strahlenblende 6 angeflanscht. An dem der Röntgenröhre 2 gegenüberliegenden Ende der Röhre-Bildschichtträger-Halterung 5 ist ein Kassettenhalter 7 als Bildschichtträger in einem konstanten Abstand zur Röntgenröhre und zu dieser ausgerichtet befestigt. Der Kassettenhalter 7 besitzt einen Einschubschlitz 8, durch den hindurch Röntgenfilmkassetten (nicht dargestellt) eingeschoben werden können. Die Spannmittel des Kassettenhalters, von denen nur der Einstellknopf 9 dargestellt ist, gestatten nur die Halterung von vier unterschiedlichen Formaten 10, 11, 12, 13. Diese sind auf der der Röntgenröhre 2 zugewandten Seite 14 des Kassettenhalters aufgemalt. Aus dem Gehäuse 15 der Strahlenblende 6 schaut seitlich eine kreisrunde Blendenscheibe 16 vor. Der vorstehende Rand der Blendenscheibe 16 trägt die gleiche Farbe 17 wie die auf der der Röntgenröhre zugewandten Seite des Kassettenhalters aufgemalte Formatbegrenzung 12, auf die der von der Strahlenblende 6 eingeblendete Strahlenkegel 18 eingestellt ist.

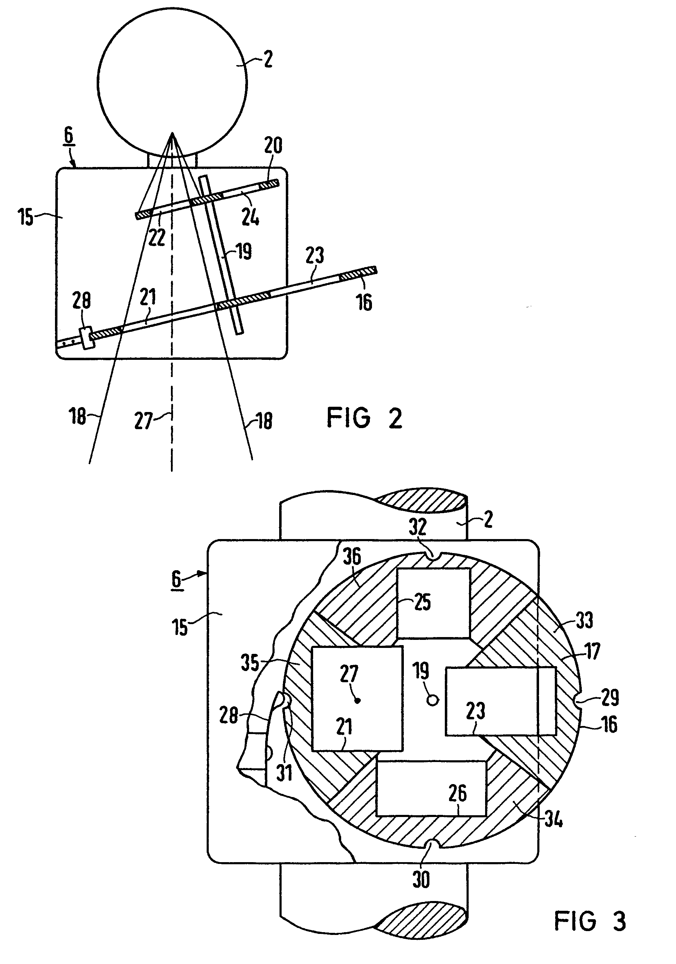

In der schematischen Darstellung der Fig. 2 erkennt man, dass die seitlich aus dem Blendengehäuse 15 vorstehende Blendenscheibe 16 auf einer Achse 19 befestigt ist, auf der sich etwas näher zur Röntgenröhre 2 eine zweite kleinere Blendenscheibe 20 befindet. Man erkennt ferner, dass die in den Strahlenkegel 18 eingeschwenkten Durchbrüche 21, 22 der beiden starr miteinander auf derselben Achse 19 verbundenen Blendenscheiben 16, 20 exakt den gleichen Strahlenkegel ausblenden. Dies gilt auch für die anderen mit den beiden Blendenscheiben gemeinsam in den Strah-

lenkegel drehbaren Durchbrüche 23, 24, 25, 26 (Fig. 3). Das der Röntgenröhre 2 zugewandte Ende der Achse 19, auf der die Blendenscheiben befestigt sind, ist näher zum Zentralstrahl 27 gelagert als sein anderes Ende. Ausserdem zeigt die Fig. 3 eine im Blendengehäuse 16 eingebaute, in Fig. 3 deutlich dargestellte Raste 28.

In der Fig. 3 erkennt man, dass die Raste 28 in am Umfang der grossen Blendenscheibe 16 angebrachten Kerben 29, 30, 31, 32 in Eingriff bringbar ist. Diese Kerben sind so angeordnet, dass die in eine Kerbe eingreifende Raste 28 die Blendenscheibe 16 in der Position hält, bei der jeweils einer ihrer Durchbrüche 21, 23, 25, 26 zum Zentralstrahl 27 des ausblendbaren Strahlenkegels zentriert ist. In der Fig. 3 erkennt man auch, dass der Rand der grossen Blendenscheibe 16 auf ihrem Umfang verteilt so viele unterschiedlich eingefärbte Abschnitte 33, 34, 35, 36 trägt, wie Durchbrüche 21, 23, 25, 26 vorhanden sind. Die farbigen Abschnitte sind so positioniert, dass bei jedem eingerasteten Ausblendformat die diesem Format zugeordnete Farbe auf dem aus dem Blendengehäuse 15 vorstehenden Rand der Blendenscheibe 16 erscheint.

Beim Untersuchen wählt der Arzt eine dem Untersuchungsbereich angepasste Röntgenfilmkassette. Dabei kann er nur zwischen den vier auf der der Röntgenröhre zugewandten Seite des Kassettenhalters eingezeichneten Formaten 10, 11, 12, 13 wählen. Setzt er eine Röntgenfilmkassette eines dieser Formate ein, wobei die Spannmittel die Röntgenfilmkassette dieses Format nur bei entsprechendem Einstellen des Einstellknopfes 9 am Kassettenhalter 7 festhalten, so ist am Einstellknopf, in hier nicht weiter dargestellter Weise, diese Farbe abzulesen. Sie entspricht auch der Farbe, mit der dieses Format auf der der Röntgenröhre 2 zugewandten Seite des Kassettenhalters 7 aufgezeichnet ist. Nunmehr braucht die Bedienungsperson die Blendenscheibe 16 nur so lange zu drehen, bis diese gleiche Farbe auf dem aus dem Gehäuse 15 der Strahlenblende 6 vorstehenden Rand der grossen Blendenscheibe 16 erscheint. Rastet dann die Raste 28 in die entsprechende Kerbe 29, 30, 31, 32 am Rand der Blendenscheibe 16 ein, so ist dieses Format durch die Strahlenblende 6 exakt ausgeblendet. Die Aufnahme kann ausgelöst werden.

Durch die schräge Anordnung der Achse 19 für die Blendenscheiben 16, 20 kann das Gehäuse 15 der Strahlenblende 6 kleiner gehalten werden, weil für die kleine, der Röntgenröhre 2 zugewandten Blendenscheibe 20 der Abstand von der Achse 19 zum Zentralstrahl 27 kleiner wird und diese Blendenscheibe daher noch kleiner sein kann, als wenn die Achse parallel zum Zentralstrahl ausgerichtet wäre. Ausserdem wird durch die Schrägstellung der Achse 19 infolge diagonaler Einstellung dieser kleineren Blendenscheibe 20 weiterer Platz eingespart. Da die Strahlenblende 6 keinen separaten Antrieb und ausser der Achse 19 mit den darauf unverrückbar befestigten Blendenscheiben 16, 20 keine beweglichen Teile enthält, sind Störungen nicht zu erwarten.

Statt des Kassettenhalters könnte auch ein Blattfilmwechsler oder ein Röntgenzielgerät verwendet sein.

## Patentansprüche

1. Röntgenuntersuchungsgerät mit einer an einem Ende einer Röhre-Bildschichtträger-Halterung gehaltenen Röntgenröhre mit angeflanschter Strahlenblende und einem am anderen Ende der Halterung in konstantem Abstand von der Röntgenröhre, zu dieser ausgerichtet gehaltenen Bildschichtträger, mit Mitteln zur zentrischen Positionierung von Bildschichten bestimmter vorgegebener Formate, dadurch gekennzeichnet, dass die Strahlenblende (6) mindestens eine um eine neben dem auszublendenden Strahlenkegel (18) angeordnete Achse (19) drehbare Blendenscheibe (16, 20) mit in den Strahlenkegel einschwenkbaren, den vorbestimmten Formaten (10, 11, 12, 13) der Bildschicht angepassten Durchbrüchen (21, 22, 23, 24, 25, 26) beinhaltet.

2. Röntgenuntersuchungsgerät nach Anspruch 1, dadurch gekennzeichnet, das zwei verschiedene Blendenscheiben (16, 20) hintereinander auf der gleichen Achse (19) befestigt sind und ihre gemeinsam in den Strahlenkegel (18) drehbaren Durchbrüche (21, 22, 23, 24, 25, 26) den jeweils gleichen Strahlenkegel ausblenden.

3. Röntgenuntersuchungsgerät nach Anspruch 2, dadurch gekennzeichnet, dass die Achse (19) an ihrem der Röntgenröhre (2) zugewandten Ende näher zum Zentralstrahl (27) gelagert ist als an ihrem anderen Ende.

4. Röntgenuntersuchungsgerät nach Anspruch 1, dadurch gekennzeichnet, dass eine Blendenscheibe (16) seitlich aus dem Gehäuse (15) der Strahlenblende (6) vorsteht.

5. Röntgenuntersuchungsgerät nach Anspruch 1 oder 4, dadurch gekennzeichnet, dass die Blendenscheibe (16) Kerben (29, 30, 31, 32) trägt, die mit einer ihnen zugeordneten, im Gehäuse (15) befestigten Raste (28) in Eingriff bringbar sind.

6. Röntgenuntersuchungsgerät nach Anspruch 4, dadurch gekennzeichnet, dass der aus dem Blendengehäuse (15) vorstehende Segmentrand der Blendenscheibe (16) je Durchbruch (21, 23, 25, 26) ein anderes Symbol trägt.

7. Röntgenuntersuchungsgerät nach Anspruch 6, dadurch gekennzeichnet, dass das Symbol eine Farbe ist.

8. Röntgenuntersuchungsgerät nach Anspruch 6 oder 7, dadurch gekennzeichnet, dass das Symbol mit einem dem entsprechenden Format zugeordneten Symbol des Bildschichtträgers (7) übereinstimmt.

## Claims

1. X-ray examination apparatus having an X-ray tube with a flange-mounted radiation diaphragm which is held at one end of a tube tomograph carrier holder, and having a tomograph carrier which is held at the other end of the holder at a constant distance from the X-ray tube so as to be aligned thereto and which has means for centrically positioning tomographs of specific predetermined formats, characterized in that the radiation diaphragm (6) comprises at least one diaphragm disc (16, 20) rotatable about an axis (19) arranged beside the conical beam path (18), which is to be gated out, and which diaphragm disc has openings (21, 22, 23, 24, 25, 26) which can be pivoted into the conical beam path and are matched to the predetermined formats (10, 11, 12, 13) of the tomograph.

2. X-ray examination apparatus as claimed in Claim 1, characterized in that two different diaphragm discs (16, 20) are consecutively secured on the same axis (19) and their openings (21, 22, 23, 24, 25, 26), which are commonly rotatable into the conical beam path (18), gate out the respectively identical conical beam.

3. X-ray examination apparatus as claimed in Claim 2, characterized in that the axis (19) is more closely mounted to the central beam path (27) at its end facing the X-ray tube (2) than at its other end.

4. X-ray examination apparatus as claimed in Claim 1, characterized in that one diaphragm disc (16) laterally protrudes from the housing (15) of the radiation diaphragm (6).

5. X-ray examination apparatus as claimed in Claim 1 or 4, characterized in that the diaphragm disc (16) carries indentations (29, 30, 31, 32) which can be brought into engagement with a notch (28) assigned thereto and secured in the housing (15).

6. X-ray examination apparatus as claimed in Claim 4, characterized in that the segment edge of the diaphragm disc (16) which protrudes from the diaphragm housing (15) carries a different symbol for every opening (21, 23, 25, 26).

7. X-ray examination apparatus as claimed in Claim 6, characterized in that the symbol is a colour.

8. X-ray examination apparatus as claimed in Claim 6 or 7, characterized in that the symbol corresponds to a symbol of the tomograph carrier (7) which is assigned to a corresponding format.

**Revendications**

1. Appareil pour l'examen radiologique comportant un tube radiogène à diaphragme de rayonnement fixé par bride, et monté à une extrémité d'une monture d'un support de couche d'image du tube, ainsi qu'un support de couche d'image maintenu à l'autre extrémité de la monture, à une distance constante du tube radiogène, et dirigé vers ce dernier et des moyens pour placer en position centrée des couches d'images de différents formats prédéterminés, caractérisé par le fait que le diaphragme de rayonnement (6) comporte au moins un disque-diaphragme (16, 20) susceptible de tourner autour d'un axe (19) disposé près du cône de rayonnement (18) à collimater et pourvu d'ouvertures (21, 22, 23, 24, 25, 26) susceptibles d'être basculées dans le cône de rayonnement et adaptées aux formats prédéterminés (10, 11, 12, 13) de la couche d'image.

2. Appareil pour l'examen radiologique selon la revendication 1, caractérisé par le fait que deux disques-diaphragmes différents (16, 20) sont fixés l'un derrière l'autre sur le même axe (19) et leurs ouvertures (21, 22, 23, 24, 25, 26) susceptibles d'être amenées en commun dans le cône de rayonnement sont aptes à collimater respectivement le même cône de rayonnement.

3. Appareil pour l'examen radiologique selon la revendication 2, caractérisé par le fait que l'axe (19) est, à son extrémité voisine du tube radiogène (2), plus proche du rayon central (27) que ne l'est son autre extrémité.

4. Appareil pour l'examen radiologique selon la revendication 1, caractérisé par le fait qu'un disque-diaphragme (16) est latéralement saillant sur le bord du diaphragme de rayonnement (6).

5. Appareil pour l'examen radiologique selon la revendication 1 ou 4, caractérisé par le fait que le disque-diaphragme (16) porte des encoches (29, 30, 31, 32) qui sont susceptibles d'être amenées à coagir avec un cliquet (28) qui leur est associé et qui est fixé dans le boîtier (15).

6. Appareil pour l'examen radiologique selon la revendication 4, caractérisé par le fait que le bord du segment du disque-diaphragme (16) en saillie sur le boîtier de diaphragme porte un symbole différent par ouverture (21, 23, 25, 26).

7. Appareil pour l'examen radiologique selon la revendication 6, caractérisé par le fait que le symbole est une couleur.

8. Appareil pour l'examen radiologique selon la revendication 6 ou 7, caractérisé par le fait que le symbole coïncide avec un symbole du support de couche d'image, qui est associé au format correspondant.

FIG 1

FIG 2

FIG 3